# EUROPEAN PATENT SPECIFICATION

(11) **EP 1 551 244 B1**
(45) Date of publication and mention of the grant of the patent: **08.09.2010**
(21) Application number: 03762643.9
(22) Date of filing: 07.07.2003
(51) Int. Cl.: A43B 7/12

(54) **WATERPROOF AND BREATHABLE SOLE FOR SHOES**
WASSERDICHTE UND ATMUNGSAKTIVE SOHLE F R SCHUHE
SEMELLE DE CHAUSSURE ETANCHE A L'EAU ET PERMEABLE A L'AIR

(30) Priority: 09.07.2002 IT PD20020187
(43) Date of publication of application: 13.07.2005
(73) Proprietor: Geox S.p.A., 31044 Montebelluna Località Biadene (Treviso) (IT)
(72) Inventor: POLEGATO MORETTI, Mario, I-31035 Crocetta del Montello (IT); FERRARESE, Antonio, IT-37063 ISOLA DELLA SCALA (IT)
(74) Representative: Modiano, Micaela Nadia
(86) International application number: PCT/EP2003/007273
(87) International publication number: WO 2004/004505

(56) References cited:
- WO-A-01/82731
- WO-A-02/32246
- WO-A-98/51177
- WO-A1-97/14326
- DE-C- 10 058 094

## Description

### Technical Field

The present invention relates to an improved waterproof and breathable sole for shoes.

### Background Art

Plastic waterproof and breathable soles for shoes are already known.

One of these soles is disclosed in Italian patent no. 1,282,196 by the same Applicant.

In this case, the sole comprises:
-- a mid-sole with a membrane made of a material that is impermeable to water and permeable to water vapor, associated with a lower protective layer made of a material that is resistant to hydrolysis, water-repellent, breathable and/or perforated;
-- a tread made of perforated elastomer that is joined perimetrically and hermetically to the mid-sole.

A waterproof and breathable sole disclosed in WO 98/51177 by the same Applicant is also known; it comprises a preassembled insert in which there is a membrane that is impermeable to water and permeable to water vapor, associated with a lower protective layer made of a material that is resistant to hydrolysis, water-repellent, breathable and/or perforated.

The insert is completed by an element that is overmolded or assembled in place and surrounds the membrane and the protective layer and is joined hermetically to them.

The insert is part of a mid-sole and is joined together with said mid-sole to a tread made of perforated plastic, which is overmolded or assembled in place.

In both cases, the protective layer arranged below the membrane is meant to protect said membrane against piercing due to foreign objects accidentally passing through the holes.

The protective layer is normally made of felt and is coupled to the membrane in a breathable manner (by means of spots of thermoplastic adhesive which has for example a polyurethane base), to allow the passage of the vapor from the inside of the shoe toward the outside through the holes provided in the tread.

Although the soles described above have been commercially available for years now and are unanimously acknowledged to be capable of ensuring a correct exchange of heat and water vapor between the microclimate inside the shoe and the external microclimate, they have been found to have drawbacks, including in particular the tendency for the membrane to tear due to the different traction elasticity modulus with respect to the tread, with which it is monolithically assembled peripherally.

The membrane is in fact normally made of expanded polytetrafluoroethylene, which is a scarcely elastic material, while the tread by its very nature and due to its operating requirements must be very elastic and flexible.

Accordingly, the membrane is unable to absorb the flexural stresses that produce an elastic elongation of the polymer, of which the elastomeric tread is made (PVC, TR, polyurethane, rubber, et cetera), in movements, during use and accordingly tends to tear because its elasticity modulus is exceeded, and loses its waterproofness.

The protective element below the membrane, which is normally made of polyester felt, has been found unable, on its own, to absorb the tensions induced by the deformations of the sole.

In order to reduce the elongation, the structure disclosed in WO 02/32246 A1 has been adopted; this patent describes the use of composite materials with a high ultimate tensile strain and low elongation, but the insertion of said materials is expensive and also causes a general stiffening of the shoe.

Furthermore, the problem of the breakage of the membrane is not solved permanently, because of the reversibility of the phenomenon of thermoplasticity of the polyurethane adhesive used to laminate the membrane with the felt layer: the melting point of said adhesive (for example 65 °C) is in fact lower than the temperature (for example 180 °C) at which the polymer that constitutes the tread and must form a peripheral seal on the membrane is injected into the mold.

Temperatures higher than the melting point of the polyurethane adhesive can be reached both during the normal production of the shoe and during use of the shoe (for example when walking on hot tarmac during the summer period).

By reaching temperatures higher than the melting point, the thermoplastic adhesive is reactivated and the viscosity is reduced considerably (it is known that viscosity is a function of temperature), allowing complete absorption of said adhesive by the felt.

This means that once the assembly cools, there is no longer enough adhesive to allow adequate coupling of the membrane to the felt layer.

All the stress to which the sole is subjected during use is therefore transmitted to the membrane, which tears due to the problems described above.

This problem is entirely new in soles with respect to other uses for which a membrane that is impermeable to water and permeable to vapor is used.

This performance at high temperatures is in fact not required, for example, for producing laminated fabrics to be used as a lining on an upper, because in such cases temperatures on the order of the temperatures reached in the molding of soles made of polymeric materials are never reached.

In these cases, a maximum temperature of 100 °C can in fact be reached.

### Disclosure of the Invention

The aim of the present invention is therefore to provide a waterproof and breathable sole for shoes having an improved structure that is capable of eliminating the drawbacks noted above in known types, which lead to the tearing of the waterproof and water vapor-permeable membrane.

Within this aim, an object of the invention is to not reduce in any case the waterproofness and breathability capabilities of the sole.

Another object is to provide a sole that does not entail particular constructive complications with respect to known soles.

Another object is to provide a sole whose costs are competitive with respect to the costs of known types.

This aim and these and other objects that will become better apparent hereinafter are achieved by a waterproof and breathable sole for shoes, having a structure that comprises:
-- a mid-sole with a membrane made of a material that is impermeable to water and permeable to water vapor and is associated in spots with a lower protective layer made of a material that is resistant to hydrolysis, water-repellent, breathable and/or perforated;
-- a tread made of perforated elastomer that is joined perimetrically and hermetically to the mid-sole;
said structure being **characterized in that** said membrane is associated with said protective layer by means of a thermoreactive adhesive.

### Brief description of the drawings

Further characteristics and advantages of the invention will become better apparent from the detailed description of some embodiments thereof, illustrated by way of non-limitative example in the accompanying drawings, wherein:
Figure 1 is a transverse sectional view of a waterproof and breathable sole for shoes having the structure according to the invention, in a first embodiment thereof;
Figure 2 is a transverse sectional view of a waterproof and breathable sole for shoes having the structure according to the invention, in a second embodiment thereof.

### Ways to carrying out the Invention

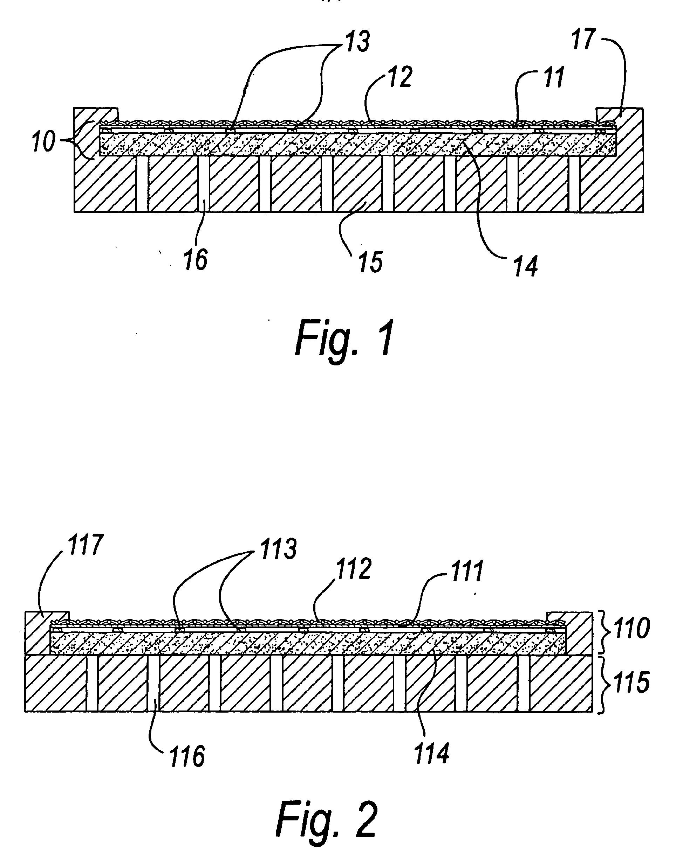

With reference to Figure 1, a waterproof and breathable sole for shoes has, in a first embodiment, a structure that comprises a mid-sole 10 that is composed of a membrane 11 made of a material that is impermeable to water and permeable to water vapor (normally commercially available and made for example of expanded polytetrafluoroethylene), laminated over a supporting mesh 12 made of synthetic material and associated, by way of spots of adhesive 13, with a lower protective layer 14 made of a material that is resistant to hydrolysis, water-repellent, breathable and/or perforated, preferably a polyester felt.

The structure further comprises a tread 15 made of elastomer, with through holes 16, which is overmolded or assembled in place on the mid-sole 10 and is perimetrically joined hermetically thereto (see the borders 17 that surround its edges in Figure 1).

According to the invention, the structure is **characterized in that** said membrane 11 is associated with said protective layer 14 by way of a thermoreactive adhesive.

Thermoreactive adhesives are adhesives that are per se known in another technical field; they are in fact used for example to produce barrier fabrics for surgical uses, which are formed by two or more layers of different materials that are laminated together.

Said fabrics in fact require repeated sterilizations in an autoclave at high temperatures in order to allow their reuse, and it is evident that the high temperature reached during the sterilization operation must not cause the separation of the two or more elements that constitute the barrier fabric.

These adhesives, due to the temperature, produce many intermolecular bonds (between molecules), thus forming a three-dimensional structure that is partially rigid and in any case thermally irreversible.

The bonds occur between the NCO and OH groups that are present in the molecular chains that constitute said adhesives.

Thermoreactive adhesives, usable for the purposes of the invention are, for example, thermoplastic polyurethane adhesives which are manufactured by the company SCHAETTI AG, Switzerland, and marketed under the name PU SCHAETTI FIX 6050.

Practical tests of the use of these thermoreactive adhesives to associate in spots the membrane 11 with the protective layer 14 have shown that their molecular bonds do not allow melting and absorption at high temperatures of the adhesive by the felt of the protective layer 14, preventing the separation of the membrane 11 and thus allowing the distribution of the stress over a larger cross-section (membrane 11 + felt of the layer 14).

All this avoids the breakage of the membrane 11 due to its elasticity modulus being exceeded.

With reference now to Figure 2, a waterproof and breathable sole for shoes, in a second embodiment, has a structure that comprises a preassembled insert 110, which corresponds to the mid-sole 10 of the previous embodiment and in which there is a membrane 111 which is made of a material that is impermeable to water and permeable to water vapor (normally commercially available, for example made of expanded polytetrafluoroethylene), which is laminated over a supporting mesh 112 made of synthetic material and associated by spots of adhesive 113 with a lower protective layer 114 made of a material that is resistant to hydrolysis, water-repellent, breathable and/or perforated, preferably a polyester felt.

The insert 110 is completed by a perimetric element 117 that is overmolded or assembled in place and surrounds the membrane 111 (with the mesh 112) and the protective layer 114 and is joined hermetically to them.

The insert 110 is joined to a tread 115 made of elastomer, with through holes 116, that is overmolded or assembled in place thereon.

In this case also, the structure is **characterized in that** said membrane 111 is associated with said protective layer 114 by way of a thermoreactive adhesive 113.

The method for obtaining the described improved shoe sole is based on the steps for assemblying the sole parts as disclosed in relation with the preferred embodiments of the invention.

In practice it has been found that the intended aim and objects of the present invention have been achieved.

A waterproof and breathable sole for shoes having an improved structure has in fact been devised which eliminates the drawbacks suffered by known types which lead to the tearing of the waterproof and vapor-permeable membrane, without reducing the waterproofness and breathability characteristics of the sole.

Moreover, the manufacture of the sole does not entail particular constructive complications with respect to conventional soles.

The invention thus conceived is susceptible of numerous modifications and variations, all of which are within the scope of the appended claims.

All the details may further be replaced with other technically equivalent elements.

In practice, the dimensions may be any according to requirements.

## Claims

1. A waterproof and breathable sole for shoes, having a structure that comprises:
-- a mid-sole component (10, 110) with a membrane (11, 111) made of a material that is impermeable to water and permeable to water vapor and is connected in spots with a lower protective layer (14, 114) made of a material that is resistant to hydrolysis, water-repellent, breathable and/or perforated;
-- a tread (15, 115) made of perforated elastomer that is joined perimetrically and hermetically to the component (10, 110);
said structure being **characterized in that** said membrane (11, 111) is associated with said protective layer (14, 114) by way of a thermoreactive adhesive (13, 113).

2. The sole having the structure according to claim 1, **characterized in that** said membrane (11) and said protective layer (14) associated therewith are joined hermetically to said tread (15), which is overmolded or assembled in place on said component (10).

3. The sole having the structure according to claim 1, **characterized in that** said membrane (111) and said protective layer (114) are part of a mid-sole (110) with a preassembled insert that comprises a perimetric element (117) that is overmolded or assembled in place and surrounds said membrane (111) and said protective layer (114) and is joined to them hermetically, said insert (110) being coupled to said tread (115), which is overmolded or assembled in place thereon.

4. Use of thermoreactive adhesives to join in spots a membrane (11, 111) made of a material that is impermeable to water and permeable to water vapor and a protective layer (14, 114) made of a material that is resistant to hydrolysis, water-repellent, breathable and/or perforated, in order to provide waterproof and breathable soles for shoes.

5. A method for making a waterproof and breathable sole for shoes that has a structure having a mid-sole component (10, 110) with a membrane (11, 111) made of a material that is impermeable to water and permeable to water vapor and is connected in spots with a lower protective layer (14, 114) made of a material that is resistant to hydrolysis, water-repellent, breathable and/or perforated; a tread (15, 115) made of perforated elastomer that is joined perimetrically and hermetically to the component (10, 110); comprising a step of connecting said membrane (11, 111) to said protective layer (14, 114) by way of a thermoreactive adhesive (13, 113).

6. The sole having the structure according to claim 1, **characterized in that** said thermoreactive adhesive (13,113) forms a thermally irreversible three-dimensional structure with intermolecular bonds between NCO and OH groups present in molecular chains of said thermoreactive adhesive (13,113).

7. The use according to claim 4, **characterized in that** said thermoreactive adhesive (13,113) forms a thermally irreversible three-dimensional structure with intermolecular bonds between NCO and OH groups present in molecular chains of said thermoreactive adhesive (13,113).

8. The method according to claim 5, **characterized in that** said thermoreactive adhesive (13,113) forms a thermally irreversible three-dimensional structure with intermolecular bonds between NCO and OH groups present in molecular chains of said thermoreactive adhesive (13,113).

## Patentansprüche

1. Wasserdichte und atmungsaktive Schuhsohle, deren Struktur umfasst:
-- eine Zwischensohlenkomponente (10, 110) mit einer Membran (11, 111) aus einem wasserundurchlässigen und wasserdampfdurchlässigen Material, die punktuell mit einer unteren Schutzschicht (14, 114) aus einem Material verbunden ist, das hydrolysebeständig, wasserabstoßend, atmungsaktiv und/oder perforiert ist;
-- eine Laufsohle (15, 115) aus perforiertem Elastomer, die perimetrisch und hermetisch mit der Komponente (10, 110) verbunden ist;
wobei die Struktur **dadurch gekennzeichnet, dass** die Membran (11, 111) mit der Schutzschicht (14, 114) mittels eines thermoreaktiven Klebers (13, 113) vereinigt ist.

2. Sohle mit der Struktur nach Anspruch 1, **dadurch gekennzeichnet, dass** die Membran (11) und die damit vereinigte Schutzschicht (14) hermetisch mit der Laufsohle (15) verbunden sind, die in-situ auf die Komponente (10) aufgespritzt oder aufgebaut wird.

3. Sohle mit der Struktur nach Anspruch 1, **dadurch gekennzeichnet, dass** die Membran (111) und die Schutzschicht (114) Teil einer Zwischensohle (110) mit einer vorgefertigten Einlage sind, welche ein Umfangselement (117) umfasst, das in-situ aufgespritzt oder aufgebaut wird und die Membran (111) und die Schutzschicht (114) umgibt und hermetisch mit diesen verbunden ist, wobei die Einlage (110) an die Laufsohle (115) gekoppelt ist, die hierauf in-situ aufgespritzt oder aufgebaut wird.

4. Verwendung thermoreaktiver Klebstoffe, um punktuell eine Membran (11, 111) aus einem wasserundurchlässigen und wasserdampfdurchlässigen Material und eine Schutzschicht (14, 114) aus einem hydrolysebeständigen, wasserabstoßenden, atmungsaktiven und/oder perforierten Material zu verbinden, um wasserdichte und atmungsaktive Schuhsohlen bereitzustellen.

5. Verfahren zum Herstellen einer wasserdichten und atmungsaktiven Schuhsohle mit einer Struktur mit einer Zwischensohlenkomponente (10, 110) mit einer Membran (11, 111) aus einem wasserundurchlässigen und waaserdampfdurchlässigen Material und die punktuell mit einer unteren Schutzschicht (14, 114) aus einem Material, das hydrolysebeständig, wasserabstoßend, atmungsaktiv und/oder perforiert ist, verbunden ist; einer Laufsohle (15, 115) aus perforiertem Elastomer, die perimetrisch und hermetisch mit der Komponente (10, 110) verbunden ist; umfassend einen Schritt zum Verbinden der Membran (11, 111) mit der Schutzschicht (14, 114) durch einen thermoreaktiven Kleber (13, 113).

6. Sohle mit der Struktur nach Anspruch 1, **dadurch gekennzeichnet, dass** der thermoreaktive Kleber (13, 113) eine thermisch irreversible dreidimensionale Struktur mit intermolekularen Bindungen zwischen NCO- und OH-Gruppen ausbildet, die in den Molekülketten des thermoreaktiven Klebers (13, 113) vorhanden sind.

7. Verwendung nach Anspruch 4, **dadurch gekennzeichnet, dass** der thermoreaktive Kleber (13, 113) eine thermisch irreversible dreidimensionale Struktur mit intermolekularen Bindungen zwischen NCO- und OH-Gruppen ausbildet, die in den Molekülketten des thermoreaktiven Klebers (13, 113) vorhandenen sind.

8. Verfahren nach Anspruch 5, **dadurch gekennzeichnet, dass** der thermoreaktive Kleber (13, 113) eine thermisch irreversible dreidimensionale Struktur mit intermolekularen Bindungen zwischen NCO- und OH-Gruppen ausbildet, die in den Molekülketten des thermoreaktiven Klebers (13, 113) vorhandenen sind.

## Revendications

1. Semelle résistante à l'eau et perméable à l'air pour chaussures, ayant une structure qui comprend :
un composant d'intercalaire (10, 110) avec une membrane (11, 111) réalisée avec un matériau qui est résistante à l'eau et perméable à la vapeur d'eau et est raccordé par points avec une couche de protection inférieure (14, 114) réalisée avec un matériau qui est résistant à l'hydrolyse, hydrophobe, perméable à l'air et/perforé ;
une semelle extérieure (15, 115) réalisée avec un élastomère perforé qui est assemblée de manière périmétrale et hermétique au composant (10, 110) ;
ladite structure étant **caractérisée en ce que** ladite membrane (11, 111) est associée à ladite couche de protection (14, 114) au moyen d'une colle thermoréactive (13, 113).

2. Semelle ayant la structure selon la revendication 1, **caractérisée en ce que** ladite membrane (11) et ladite couche de protection (14) associée à cette dernière sont assemblées hermétiquement à ladite semelle extérieure (15), qui est surmoulée ou assemblée en place sur ledit composant (10).

3. Semelle ayant la structure selon la revendication 1, **caractérisée en ce que** ladite membrane (111) et ladite couche de protection (114) font partie d'une semelle intermédiaire (110) avec un insert pré-assemblé qui comprend un élément périmétral (117) qui est surmoulé ou assemblé en place et entoure ladite membrane (111) et ladite couche de protection (114) et est assemblé à ces dernières de manière hermétique, ledit insert (110) étant couplé à ladite semelle extérieure (115) qui est surmoulée ou assemblée en place sur ce dernier.

4. Utilisation de colles thermoréactives pour assembler par points une membrane (11, 111) réalisée avec un matériau qui est résistant à l'eau et perméable à la vapeur d'eau et une couche de protection (14, 11A) réalisée avec un matériau qui est résistant à l'hydrolyse, hydrophobe, perméable à l'air et/ou perforé, afin d'obtenir des semelles résistantes à l'eau et perméables à l'air pour chaussures.

5. Procédé pour fabriquer une semelle résistante à l'eau et perméable à l'air pour chaussures, qui a une structure ayant un composant d'intercalaire (10, 110) avec une membrane (11, 111) réalisée avec un matériau qui est résistant à l'eau et perméable à la vapeur d'eau et est relié par points avec une couche de protection inférieure (14, 114) réalisée avec un matériau qui est résistant à l'hydrolyse, hydrophobe, perméable à l'air et/ou perforé ; une semelle extérieure (15, 115) réalisée avec un élastomère perforé qui est assemblé de manière périmétrale et hermétique au composant (10, 110) ; comprenant une étape consistant à raccorder ladite membrane (11, 111) à ladite couche de protection (14, 114) au moyen d'une colle thermoréactive (13, 113).

6. Semelle ayant la structure selon la revendication 1, **caractérisée en ce que** ladite colle thermoréactive (13, 113) forme une structure tridimensionnelle thermiquement irréversible avec des liaisons intermoléculaires entre les groupes NCO et OH présents dans les chaînes moléculaires desdites colles thermoréactives (13, 113).

7. Utilisation selon la revendication 4, **caractérisée en ce que** ladite colle thermoréactive (13, 113) forme une structure tridimensionnelle thermiquement irréversible avec des liaisons intermoléculaires entre les groupes NCO et OH présents dans les chaînes moléculaires de ladite colle thermoréactive (13, 113).

8. Procédé selon la revendication 5, **caractérisée en ce que** ladite colle thermoréactive (13, 113) forme une structure tridimensionnelle thermiquement irréversible avec des liaisons intermoléculaires entre les groupes NCO et OH présents dans les chaînes moléculaires de ladite colle thermoréactive (13, 113).
